# EUROPÄISCHE PATENTSCHRIFT

(11) **EP 0 540 066 B1**
(45) Veröffentlichungstag und Bekanntmachung des Hinweises auf die Patenterteilung: **04.09.1996**
(21) Anmeldenummer: 92122004.2
(22) Anmeldetag: 08.11.1989
(51) Int. Cl.: C08K 5/20, C08L 77/00, C08L 101/00

(54) **Thermoplastischer faserverstärkter Verbundwerkstoff mit einem Gehalt an Polyamiden**
Fibre-reinforced thermoplastic composite containing polyamides
Matériaux composite thermoplastique renforcé par des fibres, contenant des polyamides

(30) Priorität: 15.11.1988 AT 2790/88
(43) Veröffentlichungstag der Anmeldung: 05.05.1993
(62) Teilanmeldung aus: 89120693.0
(73) Patentinhaber: PCD-Polymere Gesellschaft m.b.H., A-2323 Schwechat-Mannswörth (AT)
(72) Erfinder: Horacek, Heinz, Dr., A-4040 Puchenau (AT)
(74) Vertreter: Kunz, Ekkehard, Dr.

(56) Entgegenhaltungen:
- EP-A- 0 369 313

## Beschreibung

Die Erfindung betrifft thermoplastische faserverstärkte Verbundwerkstoffe, die durch Imprägnieren von Verstärkungsfasern mit einer Schmelze, die aus einer Mischung von Thermoplasten, Polyamiden, Anthranilsäureamid und gegebenenfalls einem Haftvermittler erhalten wird, erhältlich sind, ein Verfahren zur Herstellung dieser Verbundwerkstoffe sowie ihre Verwendung.

Faserverstärkte thermoplastische Kunststoffe stellen wertvolle Konstruktionswerkstoffe vor allem im Maschinen- und Apparatebau dar. Derartige Kunststoffe sind beispielsweise aus der DE-PS 29 48 235 bekannt. Ein Nachteil dieser Kunststoffe liegt jedoch darin, daß vor allem in anspruchsvolleren Anwendungsbereichen ihre mechanischen Eigenschaften, insbesondere Festigkeit und Modul, nicht mehr ausreichen. Ein weiterer Nachteil liegt in ihrer teilweise schwierigen Verarbeitung, insbesondere bei Thermoplasten mit höherer Temperaturbeständigkeit, die sich vor allem in der schwierigen Imprägnierung der Verstärkungsfasern, beispielsweise von Glasfasermatten, mit diesen hochtemperaturbeständigen Thermoplastschmelzen zeigt Aus der US 3 379 792, der EP-A 221 341 und der EP-A 225 170 sind unverstärkte Formmassen auf Basis von Polyphenylenethern bekannt, bei denen die Fließeigenschaften durch Zusatz von Polyamiden verbessert, gleichzeitig allerdings die mechanischen Eigenschaften verschlechtert werden.

Eine Verbesserung der Schlagzähigkeit von Polyamid-Polyphenylenethergemischen wird gemäß EP-A-0 234 060 durch Zugabe von Estern aus drei- bis sechswertigen Alkoholen und aliphatischen Carbonsäuren erzielt. Zur Verbesserung der Kompatibilität der Polymerphasen kann diese Mischung zusätzlich flüssige Dien-Polymere, Epoxide, ungesättigte Carbonsäuren bzw. deren Derivate, aliphatische Polycarbonsäuren, Silane, funktionalisierte Polyphenylenether, oxidierte Polyolefinwachse, Copolymere von Dicarbonsäuren und vinylaromatischen Verbindungen enthalten. Ebenfalls zur Verbesserung der Kompatibilität und Stabilisierung der Phasen werden dem Polyamid-Polyphenylenethergemisch gemäß EP-A-0 270 247 oberflächenaktive Stoffe, Seifen, modifizierte Kautschuke oder Epoxide zugesetzt, wobei Kautschuke, Epoxide und ungesättigte Carbonsäuren bzw. deren Derivate bevorzugt sind. In den Beispielen wird ein mit Maleinsäureanhydrid gepfropfter Ethylen-Propylenkautschuk verwendet. Weiters werden in der WO 85/05372 thermoplastische, faserverstärkte Verbundwerkstoffe beschrieben, die aus einer Mischung von Polyphenylenether, Polyamid, Glasfasesrn und einer Polycarbonsäure bzw. deren Ester- oder N-substituierten Amidderivaten hergestellt sind.

Die Aufgabe der vorliegenden Erfindung war es, faserverstärkte Thermoplaste mit verbesserten mechanischen Eigenschaften und guter Verarbeitbarkeit zu finden.

Überraschenderweise wurde gefunden, daß derartige Verbundwerkstoffe mit guten mechanischen Eigenschaften sowie mit guter Verarbeitbarkeit erhalten werden, wenn man die Verstärkungsfasern mit einer Schmelze imprägniert, die aus einer Mischung von Thermoplasten mit Polyamiden und Anthranilsäureamid erhalten wird.

Gegenstand der Erfindung ist demnach ein thermoplastischer faserverstärkter Verbundwerkstoff, der durch Imprägnieren von Verstärkungsfasern mit der Schmelze einer Mischung, die 10 bis 90 Gew.Teile Thermoplast, 90 bis 10 Gew.Teile Polyamid und gegebenenfalls 1 bis 10 Gew. Teile Haftvermittler enthält, erhältlich ist, wobei die Mischung zusätzlich 0,1 bis 10 Gew.%, bezogen auf die Menge des Polyamids, Anthranilsäureamid enthält.

Als Thermoplaste können sämtliche für die Herstellung von faserverstärkten Kunststoffen verwendbaren Thermoplaste eingesetzt werden, beispielsweise solche, wie sie in der DE-PS 29 48 235 angeführt sind. Mögliche Thermoplaste sind z. B. Polyolefine, Polyamide, Polyimide, Polysulfone, Polyacetale, Polycarbonate, Polystyrol, Acrylharze, Polyester, Polyetherimide, Polyethersulfone, Polyetherketone, Polyetheretherketone, Polyphenylenether, Polyphenylensulfid und Polytetrafluorethylen, sowie Mischungen aus diesen Thermoplasten.

Als Polyamide eignen sich beispielsweise solche, wie sie in der EP-A 221 341 oder EP-A 225 170 angeführt sind, bevorzugt werden Polyamid 6 oder Polyamid 6,6 eingesetzt. Weitere Beispiele für Polyamide (PA) sind Poly-4-aminobuttersäure (PA 4), Poly-7-aminoheptansäure (PA 7), Poly-8-aminoctansäure (PA 8), Poly-10-aminodecansäure (PA 10), Poly-11-aminoundecansäure (PA 11), Poly-12-aminododecansäure (PA 12), Polyheptamethylenpimelamid (PA 7,7), Polyocta methylensuberamid (PA 8,8), Polyhexamethylensebacamid (PA 6,10), Polynonamethylenacelamid (PA 9,9), Polydecamethylenacelamid (PA 10,9), Polydecamethylensebacamid (PA 10,10), Polybis(4-aminocyclohexyl)methan 1,10 decandicarboxamid, Poly(m-Xylylenadipamid), Poly(p-Xylylensebacamid), Polypiperazinsebacamid. Es ist auch möglich, Mischungen von Polyamiden einzusetzen.

Der Zusatz des Säureamids bewirkt eine etwa der Menge des zugesetzten Säureamdis proportionale Reduktion der Schmelzviskosität, wodurch eine bessere Imprägnierung ermöglicht, und damit verbesserte mechanische Eigenschaften der Verbunde erhalten werden. Die Polymermischung zur Imprägnierung der Verstärkungsfasern enthält bevorzugt 0,5 bis 5 % Säureamid, bezogen auf die Menge des Polyamids.

Die gegebenenfalls zugesetzten Haftvermittler können bei verschiedenen Polyamid-Thermoplast-Mischungen eine weitere Verbesserung der mechanischen Eigenschaften bewirken. Als Haftvermittler eignen sich beispielsweise Blockcopolymere aus Polyamid und dem betreffenden Thermoplasten, oder Polyolefine mit funktionellen Gruppen, wie z. B. Carboxyl- oder Hydroxylgruppen. Die Herstellung derartiger Blockcopolymerer ist beispielsweise gemäß J. Pol. Sci., Pol. Chem. Ed. 17 (1979) S. 2317 - 2335 durch Umsetzung von Aminoendgruppen enthaltenden Polyamidblöcken mit Hydroxyl-oder Thiolendgruppen enthaltenden Polyphenylenether- oder Polyphenylensulfidblöcken und Hexamethylendiisocyanat möglich. Derartige Blockcopolymere sind auch im Handel erhältlich, beispielsweise Pebax^{(R)} von Atochem, ein Polyamid-Polyether-Blockcopolymer. Das im Handel erhältliche Bynel^{(R)}CXA 3101 von Du Pont ist ein Copolymer von Ethylen mit Carboxyl-oder Hydroxylgruppen enthaltenden Monomeren.

Die Mischung zur Imprägnierung der Verstärkungsfasern enthält bevorzugt 40 bis 60 Gew.Teile Thermoplast und 60 bis 40 Gewichtsteile Polyamid.

Bevorzugt sind Verbundwerkstoffe mit einer Wärmeformbeständigkeit von über 145° C, gemessen mit der Vicatnadel gemäß DIN 53460.

Weiters bevorzugt sind Verbundwerkstoffe, die durch Imprägnieren der Verstärkungsfasern durch Heißpressen bei Temperaturen von 10 bis 200° C über dem Schmelzpunkt der Schmelze und bei Drücken von 1,2 bis 40 bar erhältlich sind.

Als Verstärkungsfasern eignen sich alle bekannten für verstärkte Kunststoffe verwendbaren Fasern, wie z. B. Fasern aus Glas, Kohle, Aramid, Keramik, Metall oder Mischungen derselben. Unter Fasern sind sowohl Schnittfasern als auch Endlosfasern, beispielsweise in Form von unidirektionalen Rovings zu verstehen, sowie auch Gewebe und Fasermatten, die ebenfalls aus Schnittfasern oder Endlosfasern bestehen können. Der fertige Verbund besitzt üblicherwiese einen Gehalt an Verstärkungsfasern von etwa 15 bis 60 Vol.%

Ein weiterer Gegenstand der Erfindung ist die Herstellung der erfindungsgemäßen Verbundwerkstoffe. Sie erfolgt durch Aufschmelzen einer Mischung aus 10 bis 90 Gew.Teilen eines oder mehrerer Thermoplaste und 90 bis 10 Gew.Teilen eines oder mehrerer Polyamide und gegebenenfalls 1 bis 10 Gew. Teilen Haftvermittler, wobei diese Mischung 0,1 bis 10 Gew.%, bezogen auf die Menge des Polyamids, Anthranilsäureamid enthält. Mit dieser Schmelze werden bei Temperaturen, die 10 bis 200°C über dem Schmelzpunkt der Schmelze liegen, die Verstärkungsfasern imprägniert.

Fasermatten, Gewebe oder Rovings aus Endlosfasern können beispielsweise mittels Pultrusion imprägniert werden. Im Falle von Rovings können dabei entweder einzelne Rovingstränge oder mehrere zu einem Band nebeneinandergelegte Rovingstränge durch die Schmelze gezogen und nach Kalibrierung anschließend zur Verfestigung abgekühlt werden.

In einem bevorzugten Verfahren erfolgt die Imprägnierung der Verstärkungsfasern durch gemeinsames Verpressen mit der Schmelze in einer Heißpresse bei Temperaturen von 10 bis 200°C über dem Schmelzpunkt der Schmelze und bei Drücken von 1,2 bis 40 bar. Besonders bevorzugt verwendet man dabei eine kontinuierliche Presse, der die Mischung von Thermoplasten, Polyamiden, Säureamiden und gegebenenfalls Haftvermittler entweder in Form eines vorgefertigten Filmes oder als frisch extrudierte Schmelze gemeinsam mit einer oder mehreren Fasermatten, Geweben oder unidirektionalen Rovingsträngen zugeführt werden. Nach der Imprägnierung in der heißen Laminierzone der Presse erfolgt in einer anschließenden Kühlzone die Abkühlung und Verfestigung des Verbundes ebenfalls unter Druck.
Es ist auch möglich, Schnittfasern mit der pulverförmigen, das Säureamid enthaltenden Polymermischung zu vermischen, anschließend in einem Extruder aufzuschmelzen und als Strang zu extrudieren, Rovingstränge aus Endlosfasern können in einem Extrusionswerkzeug, dem gleichzeitig Schmelze und Rovings zugeführt werden, als faserverstärkter Polymerstrang extrudiert werden.

Die faserverstärkten Polymerstränge können nach Abkühlung zu Granulaten geschnitten werden, die beispielsweise durch Spritzgießen oder Extrusion zu Fertigteilen weiterverarbeitet werden können. Die in Form von Bahnen oder Platten vorliegenden Verbundwerkstoffe können als Ausgangsmaterial zur Herstellung von Formteilen durch Heißpressen verwendet werden. Die auf etwa 10 bis 200°C über den Schmelzpunkt der verwendeten Polymermischung erwärmten Bahnen oder Platten werden dabei in beheizte Formen eingelegt und bei Temperaturen von etwa 50 bis 120°C und Drücken von 1 bis 100 bar verpreßt.

### Beispiel 1

Ein Polymerblend aus 55 Gew.% Polyphenylenether (PPE) und 45 Gew.% Polyamid 6 (PA), entsprechend Ultranyl^{(R)} KR 4510 von BASF, wurde mit 2 Gew.% Anthranilsäureamid (AN), bezogen auf die Menge des Polyamids, vermischt und aus einem Extruder mit Breitschlitzdüse bei 290° C extrudiert. Der Schmelzefilm wurde auf einer Doppelbandpresse bei 250°C und 5 bar kontinuierlich mit 2 Glasmatten (Syncomat, je 650 g/m²) verpreßt. Nach dem Austrag aus der Kühlzone erhielt man eine glasfaserverstärkte Bahn von 3,2 mm Dicke, einem Flächengewicht von 4300 g/m² und einem Glasgehalt von 30 Gew.%. Der Schmelzindex (MFI, 280°C, 5 kg) der Mischung und die Eigenschaften des Verbundes sind in Tabelle 1 zusammengestellt.

Weiters sind in Tabelle 1 die enstprechenden, aus der EP-A-369 313 bekannten Werte für eine analoge Mischung bzw. analogen Verbund angeführt, die jedoch keinen Gehalt an Anthranilsäureamid aufweisen.

**Tabelle 1**

| | mit 2 % AN | ohne AN |
|---|---|---|
| MFI (g/10 min) | 260 | 18 |
| Zugfestigkeit (N/mm²) | 150 | 70 |
| Dehnung (%) | 2,5 | 3,5 |
| Schlagzähigkeit (kJ/m²) | 60 | 50 |
| Biege-E-Modul (N/mm²) | 7000 | 6000 |

## Patentansprüche (Patentansprüche für folgende(n) Vertragsstaat(en): AT, CH, DE, FR, GB, IT, LI, NL)

1. Thermoplastischer faserverstärkter Verbundwerkstoff, erhältlich durch Imprägnieren von Verstärkungsfasern mit der Schmelze einer Mischung, die 10 bis 90 Gew.Teile Thermoplast, 90 bis 10 Gew.Teile Polyamid und gegebenenfalls 1 bis 10 Gew.Teile Haftvermittler enthält, wobei die Mischung zusätzlich 0,1 bis 10 Gew.%, bezogen auf die Menge des Polyamids, Anthranilsäureamid enthält.

2. Verbundwerkstoff nach Anspruch 1, dadurch gekennzeichnet. daß er eine Wärmeformbeständigkeit von mindestens 145°C, gemessen mit der Vicatnadel gemäß DIN 53460 aufweist.

3. Verbundwerkstoff nach Anspruch 1 oder 2, dadurch gekennzeichnet, daß die Mischung zur Imprägnierung der Verstärkungsfasern 0,5 bis 5 % Anthranilsäureamid, bezogen auf die Menge des Polyamids, enthält.

4. Verbundwerkstoff nach einem der Ansprüche 1 bis 3, dadurch gekennzeichnet, daß die Mischung zur Imprägnierung der Verstärkungsfasern 40 bis 60 Gew.Teile Thermoplast und 60 bis 40 Gew.Teile Polyamid enthält.

5. Verbundwerkstoff nach einem der Ansprüche 1 bis 4, erhältlich durch Imprägnieren von Verstärkungsfasern mit der Mischung aus Thermoplast, Polyamid, Anthranilsäureamid und gegebenenfalls Haftvermittler durch Heißpressen bei Temperaturen von 10 bis 200°C über dem Schmelzpunkt der Schmelze und bei Drücken von 1,2 bis 40 bar.

6. Verfahren zur Herstellung von thermoplastischen faserverstärkten Verbundwerkstoffen nach Anspruch 1, dadurch gekennzeichnet, daß eine Mischung aus 10 bis 90 Gew.Teilen Thermoplast, 90 bis 10 Gew. Teilen Polyamid und gegebenenfalls 1 bis 10 Gew. Teilen Haftvermittler, wobei die Mischung 0,1 bis 10 Gew. %, bezogen auf die Menge des Polyamids, Anthranilsäureamid enthält, aufgeschmolzen wird, und mit der Schmelze bei Temperaturen von 10 bis 200°C über dem Schmelzpunkt der Schmelze Verstärkungsfasern imprägniert werden.

7. Verfahren zur Herstellung von Verbundwerkstoffen nach Anspruch 6, dadurch gekennzeichnet, daß die Imprägnierung durch gemeinsames Verpressen der Verstärkungsfasern mit der Mischung aus Thermoplast, Polyamid, Anthranilsäureamid und gegebenenfalls Haftvermittler bei Temperaturen von 10 bis 200°C über dem Schmelzpunkt der Schmelze und bei Drücken von 1,2 bis 40 bar erfolgt.

8. Verfahren zur Herstellung von Verbundwerkstoffen nach Anspruch 7, dadurch gekennzeichnet, daß die Mischung aus Thermoplast, Polyamid, Anthranilsäureamid und gegebenenfalls Haftvermittler in Form eines vorgefertigten Films oder eines frisch extrudierten Schmelzefilms eingesetzt wird und gemeinsam mit den Verstärkungsfasern, die in Form einer Matte oder in Form von unidirektionalen Endlosfasersträngen vorliegen, einer kontinuierlichen Presse zugeführt werden.

9. Verwendung von Verbundwerkstoffen nach einem der Ansprüche 1 bis 5 als Ausgangsmaterial zur Herstellung von Formteilen durch Heißpressen.

10. Verwendung von Verbundwerkstoffen nach einem der Ansprüche 1 bis 5 als Ausgangsmaterial zur Herstellung von Granulaten.

## Patentansprüche (Patentansprüche für folgende(n) Vertragsstaat(en): ES)

1. Verfahren zur Herstellung von thermoplastischen faserverstärkten Verbundwerkstoffen, dadurch gekennzeichnet, daß eine Mischung aus 10 bis 90 Gew.Teilen Thermoplast, 90 bis 10 Gew. Teilen Polyamid und gegebenenfalls 1 bis 10 Gew. Teilen Haftvermittler, wobei die Mischung 0,1 bis 10 Gew.%, bezogen auf die Menge des Polyamids, Anthranilsäureamid enthält, aufgeschmolzen wird, und mit der Schmelze Verstärkungsfasern imprägniert werden.

2. Verfahren zur Herstellung von Verbundwerkstoffen nach Anspruch 1, dadurch gekennzeichnet, daß die Verbundwerkstoffe eine Wärmeformbeständigkeit von mindestens 145°C, gemessen mit der Vicatnadel gemäß DIN 53460 aufweist.

3. Verfahren zur Herstellung von Verbundwerkstoffen nach Anspruch 1 oder 2, dadurch gekennzeichnet, daß die Mischung zur Imprägnierung der Verstärkungsfasern 0,5 bis 5 % Anthranilsäureamid, bezogen auf die Menge des Polyamids, enthält.

4. Verfahren zur Herstellung von Verbundwerkstoffen nach einem der Ansprüche 1 bis 3, dadurch gekennzeichnet, daß die Mischung zur Imprägnierung der Verstärkungsfasern 40 bis 60 Gew.Teile Thermoplast und 60 bis 40 Gew.Teile Polyamid enthält.

5. Verfahren zur Herstellung von Verbundwerkstoffen nach einem der Ansprüche 1 bis 4, dadurch gekennzeichnet, daß die Imprägnieren durch gemeinsames Verpressen der Verstärkungsfasern mit der Mischung aus Thermoplast, Polyamid, Anthranilsäureamid und gegebenenfalls Haftvermittler bei Temperaturen von 10 bis 200°C über dem Schmelzpunkt der Schmelze und bei Drücken von 1,2 bis 40 bar erfolgt.

6. Verfahren zur Herstellung von Verbundwerkstoffen nach Anspruch 5, dadurch gekennzeichnet, daß die Mischung aus Thermoplast, Polyamid, Anthranilsäureamid und gegebenenfalls Haftvermittler in Form eines vorgefertigten Films oder eines frisch extrudierten Schmelzefilms eingesetzt wird und gemeinsam mit den Verstärkungsfasern, die in Form einer Matte oder in Form von unidirektionalen Endlosfasersträngen vorliegen, einer kontinuierlichen Presse zugeführt werden.

7. Verwendung von Verbundwerkstoffen nach einem der Ansprüche 1 bis 6 als Ausgangsmaterial zur Herstellung von Formteilen durch Heißpressen.

8. Verwendung von Verbundwerkstoffen nach einem der Ansprüche 1 bis 6 als Ausgangsmaterial zur Herstellung von Granulaten.

## Claims (Claims for the following Contracting State(s): AT, CH, DE, FR, GB, IT, LI, NL)

1. Thermoplastic fibre-reinforced composite material, obtainable by impregnating reinforcing fibres with the melt of a mixture containing 10 to 90 parts by weight of thermoplastic, 90 to 10 parts by weight of polyamide and, if appropriate, 1 to 10 parts by weight of adhesion promoter, the mixture additionally containing 0.1 to 10% by weight, based on the amount of polyamide, of anthranilamide.

2. Composite material according to Claim 1, characterised in that it has a heat distortion temperature of at least 145°C, measured with the Vicat needle according to DIN 53460.

3. Composite material according to Claim 1 or 2, characterised in that the mixture for impregnating the reinforcing fibres contains 0.5 to 5% of anthranilamide, based on the amount of polyamide.

4. Composite material according to one of Claims 1 to 3, characterised in that the mixture for impregnating the reinforcing fibres contains 40 to 60 parts by weight of thermoplastic and 60 to 40 parts by weight of polyamide.

5. Composite material according to one of Claims 1 to 4, obtainable by impregnating reinforcing fibres with the mixture of thermoplastic, polyamide, anthranilamide and, if appropriate, adhesion promoter by hot pressing at temperatures of 10 to 200°C above the melting point of the melt and at pressures of 1.2 to 40 bar.

6. Process for producing thermoplastic fibre-reinforced composite materials according to Claim 1, characterised in that a mixture of 10 to 90 parts by weight of thermoplastic, 90 to 10 parts by weight of polyamide and, if appropriate, 1 to 10 parts by weight of adhesion promoter, the mixture containing 0.1 to 10% by weight, based on the amount of polyamide, of anthranilamide, is melted and reinforcing fibres are impregnated with the melt at temperatures of 10 to 200°C above the melting point of the melt.

7. Process for producing composite materials according to Claim 6, characterised in that the impregnation is carried out by joint pressing of the reinforcing fibres with the mixture of thermoplastic, polyamide, anthranilamide and, if appropriate, adhesion promoter at temperatures of 10 to 200°C above the melting point of the melt and at pressures of 1.2 to 40 bar.

8. Process for producing composite materials according to Claim 7, characterised in that the mixture of thermoplastic, polyamide, anthranilamide and, if appropriate, adhesion promoter is used in the form of a prefabricated film or a freshly extruded melt film and is fed to a continuous press together with the reinforcing fibres, which exist in the form of a mat or in the form of unidirectional continuous fibre strands.

9. Use of composite materials according to one of Claims 1 to 5 as a starting material for producing mouldings by hot pressing.

10. Use of composite materials according to one of Claims 1 to 5 as a starting material for producing granules.

## Claims (Claims for the following Contracting State(s): ES)

1. Process for producing thermoplastic fibre-reinforced composite materials, characterised in that a mixture of 10 to 90 parts by weight of thermoplastic, 90 to 10 parts by weight of polyamide and, if appropriate, 1 to 10 parts by weight of adhesion promoter, the mixture containing 0.1 to 10% by weight, based on the amount of polyamide, of anthranilamide, is melted and reinforcing fibres are impregnated with the melt.

2. Process for producing composite materials according to Claim 1, characterised in that the composite materials has a heat distortion temperature of at least 145°C, measured with the Vicat needle according to DIN 53460.

3. Process for producing composite materials according to Claim 1 or 2, characterised in that the mixture for impregnating the reinforcing fibres contains 0.5 to 5% of anthranilamide, based on the amount of polyamide.

4. Process for producing composite materials according to one of Claims 1 to 3, characterised in that the mixture for impregnating the reinforcing fibres contains 40 to 60 parts by weight of thermoplastic and 60 to 40 parts by weight of polyamide.

5. Process for producing composite materials according to one of Claims 1 to 4, characterised in that the impregnation is carried out by joint pressing of the reinforcing fibres with the mixture of thermoplastic, polyamide, anthranilamide and, if appropriate, adhesion promoter at temperatures of 10 to 200°C above the melting point of the melt and at pressures of 1.2 to 40 bar.

6. Process for producing composite materials according to Claim 5, characterised in that the mixture of thermoplastic, polyamide, anthranilamide and, if appropriate, adhesion promoter is used in the form of a prefabricated film or a freshly extruded melt film is used and is fed to a continuous press together with the reinforcing fibres, which exist in the form of a mat or in the form of unidirectional continuous fibre strands.

7. Use of composite materials according to one of Claims 1 to 6 as a starting material for producing mouldings by hot pressing.

8. Use of composite materials according to one of Claims 1 to 6 as a starting material for producing granules.

## Revendications (Revendications pour l'(les) Etat(s) contractant(s) suivant(s): AT, CH, DE, FR, GB, IT, LI, NL)

1. Matériau composite renforcé avec des fibres, qu'on peut obtenir par imprégnation de fibres de renfort avec la masse fondue d'un mélange qui contient 10 à 90 parties en poids d'une matière thermoplastique, 90 à 10 parties en poids d'un polyamide et éventuellement 1 à 10 parties en poids d'agent adhésif, ce mélange contenant, en outre, 0,1 à 10 % en poids d'amide d'acide anthranilique, par rapport à la quantité de polyamide.

2. Matériau composite selon la revendication 1, caractérisé en ce qu'il possède une résistance au thermoformage d'au moins 145°C, mesurée avec l'aiguille de Vicat d'après la norme DIN 53460.

3. Matériau composite selon la revendication 1 ou 2, caractérisé en ce que le mélange servant à l'imprégnation des fibres de renfort contient de 0,5 à 5 % d'amide d'acide anthranilique par rapport à la quantité de polyamide.

4. Matériau composite selon l'une des revendications 1 à 3, caractérisé en ce que le mélange servant à l'imprégnation des fibres de renfort contient de 40 à 60 parties en poids de matière thermoplastique et 60 à 40 parties en poids de polyamide.

5. Matériau composite selon l'une des revendications 1 à 4, qu'on peut obtenir par imprégnation de fibres de renfort avec le mélange de matière plastique, de polyamide, d'amide d'acide anthranilique et éventuellement d'agent adhésif, par compression à chaud à des températures de 10 à 200°C au-dessus du point de fusion de la masse fondue et à des pressions de 1,2 à 40 bars.

6. Procédé de fabrication de matériaux composites thermoplastiques renforcés avec des fibres selon la revendication 1, caractérisé en ce qu'on fait fondre un mélange de 10 à 90 parties en poids de matière thermoplastique, 90 à 10 parties en poids de polyamide et éventuellement 1 à 10 parties en poids d'agent adhésif, ce mélange contenant de 0,1 à 10 % en poids d'amide d'acide anthranilique, par rapport à la quantité de polyamide, et on imprègne des fibres de renfort avec cette masse fondue, à des températures de 10 à 200°C au-dessus du point de fusion de la masse fondue.

7. Procédé de fabrication de matériaux composites selon la revendication 6, caractérisé en ce qu'on effectue l'imprégnation par compression conjointe des fibres de renfort avec le mélange de matière thermoplastique, de polyamide, d'amide d'acide anthranilique et éventuellement d'agent adhésif, à des températures de 10 à 200°C au-dessus du point de fusion de la masse fondue et à des pressions de 1,2 à 40 bars.

8. Procédé de fabrication de matériaux composites selon la revendication 7, caractérisé en ce qu'on utilise le mélange de matière thermoplastique, de polyamide, d'amide d'acide anthranilique et éventuellement d'agent adhésif sous la forme d'un film préfabriqué ou d'un film de matière fondue fraîchement extrudée et on l'amène dans une presse à régime continu en même temps que les fibres de renfort qui se présentent sous la forme d'une nappe ou sous la forme de brins unidirectionnels de fibres sans fin.

9. Utilisation des matériaux composites selon l'une des revendications 1 à 5 comme matériau de départ pour la fabrication d'éléments moulés par compression à chaud.

10. Utilisation des matériaux composites selon l'une des revendications 1 à 5 comme matériau de départ pour la fabrication de granules.

## Revendications (Revendications pour l'(les) Etat(s) contractant(s) suivant(s): ES)

1. Procédé de fabrication de matériaux composites thermoplastiques renforcés avec des fibres, caractérisé en ce qu'on fait fondre un mélange de 10 à 90 parties en poids de matière thermoplastique, 90 à 10 parties en poids de polyamide et éventuellement 1 à 10 parties en poids d'agent adhésif, ce mélange contenant de 0,1 à 10 % en poids d'amide d'acide anthranilique, par rapport à la quantité de polyamide, et on imprègne des fibres de renfort avec cette masse fondue.

2. Procédé de fabrication de matériaux composites selon la revendication 1, caractérisé en ce que ces matériaux composites possèdent une résistance au thermoformage d'au moins 145°C, mesurée avec l'aiguille de Vicat d'après la norme DIN 53460.

3. Procédé de fabrication de matériaux composites selon la revendication 1 ou 2, caractérisé en ce que le mélange servant à l'imprégnation des fibres de renfort contient de 0,5 à 5 % d'amide d'acide anthranilique par rapport à la quantité de polyamide.

4. Procédé de fabrication de matériaux composites selon l'une des revendications 1 à 3, caractérisé en ce que le mélange servant à l'imprégnation des fibres de renfort contient de 40 à 60 parties en poids de matière thermoplastique et 60 à 40 parties en poids de polyamide.

5. Procédé de fabrication de matériaux composites selon l'une des revendications 1 à 4, caractérisé en ce qu'on effectue l'imprégnation par compression conjointe des fibres de renfort avec le mélange de matière thermoplastique, de polyamide, d'amide d'acide anthranilique et éventuellement d'agent adhésif, à des températures de 10 à 200°C au-dessus du point de fusion de la masse fondue et à des pressions de 1,2 à 40 bars.

6. Procédé de fabrication de matériaux composites selon la revendication 5, caractérisé en ce qu'on utilise le mélange de matière thermoplastique, de polyamide, d'amide d'acide anthranilique et éventuellement d'agent adhésif sous la forme d'un film préfabriqué ou d'un film de matière fondue fraîchement extrudée et on l'amène dans une presse à régime continu en même temps que les fibres de renfort qui se présentent sous la forme d'une nappe ou sous la forme de brins unidirectionnels de fibres sans fin.

7. Utilisation des matériaux composites selon l'une des revendications 1 à 6 comme matériau de départ pour la fabrication d'éléments moulés par compression à chaud.

8. Utilisation des matériaux composites selon l'une des revendications 1 à 6 comme matériau de départ pour la fabrication de granules.
